# EUROPÄISCHE PATENTSCHRIFT

(11) **EP 1 394 012 B1**
(45) Veröffentlichungstag und Bekanntmachung des Hinweises auf die Patenterteilung: **26.01.2005**
(21) Anmeldenummer: 03014812.6
(22) Anmeldetag: 30.06.2003
(51) Int. Cl.: B62D 1/18

(54) **Verriegelungsvorrichtung für zwei relativ zueinander verschiebbar gelagerte Bauteile**
Locking device for two members being movable relative to each other
Dispositif de fixation pour deux elements monté coulissant l'un par rapport à l'autre

(30) Priorität: 28.08.2002 DE 10240235
(43) Veröffentlichungstag der Anmeldung: 03.03.2004
(73) Patentinhaber: ThyssenKrupp Presta Aktiengesellschaft, 9492 Eschen (LI)
(72) Erfinder: Lutz, Christian, Ing., 6714 Nüziders (AT)
(74) Vertreter: Hefel, Herbert, Dipl.-Ing.

(56) Entgegenhaltungen:
- EP-A- 0 836 981
- DE-C- 3 914 608
- DE-C- 4 436 091

## Beschreibung

Die Erfindung betrifft eine Verriegelungsvorrichtung für zwei relativ zueinander verschiebbar gelagerte Bauteile, insbesondere Teile einer höhen- bzw. neigungsverstellbaren und/oder längenverstellbaren Lenksäule, an denen gegenüberliegende Zahnleisten mit nebeneinanderliegenden Zähnen angeordnet sind, wobei eine Spanneinrichtung vorgesehen ist, mittels der die Zähne der beiden Zahnleisten unter Zusammenführung der beiden Bauteile miteinander in Eingriff bringbar sind und in deren geöffnetem Zustand die beiden Zahnleisten voneinander beabstandet sind und die beiden Bauteile relativ zueinander verschiebbar sind, und wobei zur Verhinderung eines Aufeinandertreffens der Zahnspitzen der Zähne der gegenüberliegenden Zahnleisten beim Schließen der Spanneinrichtung zumindest an einer der Zahnleisten mindestens ein gegen die Kraft einer Feder verschiebbar gelagertes Stellteil vorgesehen ist, dessen von der Zahnleiste abgewandtes freies Ende in der nach außen vorgespannten Position des Stellteils über die Spitzen der Zähne hinausragt.

Die Verwendung von Zahnleisten zur Verriegelung der Verstellmöglichkeiten einer in ihrer Höhe bzw. Neigung und/oder Länge verstellbaren Lenksäule ist in unterschiedlichen Ausführungsformen bekannt. Derartige Lenksäulen sind beispielsweise in der DE 4 436 091 C1, DE 3 914 608 C1, EP 0 836 981 A1 EP 0 836 981 B1. DE 36 19 125 C2, EP 0 440 403 B1, EP 0 755 842 B1 und DE 195 42 472 gezeigt und beschrieben. Die Verwendung von formschlüssigen Elementen, insbesondere in Form von Zahnleisten, ermöglicht eine kostengünstige und zuverlässige Konstruktion, um die in der verriegelten Stellung der Lenksäule erforderlichen Haltekräfte aufzubringen. Allerdings kann es bei diesen Konstruktionen bei bestimmten Einstellungen der beiden Bauteile relativ zueinander zu Problemen bei der ordnungsgemäßen Verriegelung kommen, und zwar wenn die Spitzen der Zähne der beiden Zahnleisten nach der Vierstellung der beiden Bauteile einander direkt gegenüberliegen, sich also in einer sogenannten "Kopf auf Kopf'-Stellung befinden. Soll in dieser Stellung der beiden Bauteile die Verriegelungsvorrichtung mittels der Spanneinrichtung geschlossen werden, so wird die Spanneinrichtung blockiert, oder die Spanneinrichtung kann zwar geschlossen werden, die Zähne der Zahnleisten liegen aber mit ihren Spitzen aneinander und befinden sich nicht in einem formschlüssigen Eingriff. Es muß also die Spannvorrichtung nochmals vollständig geöffnet werden und die beiden Bauteile etwas gegeneinander verschoben werden, sodaß die Zahnspitzen zueinander versetzt sind, worauf die Spanneinrichtung wieder geschlossen wird. Schlimmstenfalls kann es im Falle eines Unfalls bei einer nur scheinbar geschlossenen Position der Verriegelungsvorrichtung zu einer unkontrollierten Relativbewegung zwischen den Lenksäulenkomponenten und damit zu einer Gefährdung des Fahrers kommen.

Es wurden daher bereits verschiedene Einrichtungen vorgeschlagen, mittels denen das Aufeinandertreffen der Zahnspitzen beim Schließen der Verriegelungsvorrichtung verhindert werden soll. Bei den Einrichtungen der DE 198 39 496 A1 und der US 5,787,759 A ist zu diesem Zweck eine verschwenkbare Lagerung eines der beiden die Zahnleisten aufweisenden Teile vorgesehen. Beim Zusammenführen der Zahnleisten wird dieser verschwenkbar gelagerte Teil um eine Achse, die parallel zur Eingriffsebene der Zähne und parallel zu den Längsausdehnungen der Zähne liegt, verschwenkt. Bei der Einrichtung der DE 39 14 608 C1 ist ein in Richtung der Ebene des Zahneingriffs verschiebbar gelagertes Rastelement vorgesehen, welches weiters um eine Achse parallel zur Längsausdehnung der Zähne begrenzt verschwenkbar ist. Diese Einrichtungen sind relativ aufwendig in ihren Konstruktionen, ohne die Gefahr des Aufeinandertreffens der Zahnspitzen unter allen Umständen ausschließen zu können.

Bei der Verriegelungsvorrichtung der DE 198 46 292 sind an den beiden gegenüberliegenden Zahnleisten Magnete vorgesehen, wobei die einander zugewandten freien Spitzen der Zähne durch magnetische Kräfte voneinander abgestoßen werden. Um durch diese magnetischen Einrichtungen ein Verschieben der beiden Bauteile bei einer direkt gegenüberliegenden Position der Spitzen der Zähne der beiden Zahnleisten zu erreichen, müssen relativ hohe magnetische Kräfte aufgebracht werden, was mit einem erheblichen Aufwand verbunden ist.

Eine Einrichtung der eingangs genannten Art ist aus der EP 0 796 780 A2 bekannt. Hier ist ein Führungsstift vorgesehen, der parallel zur Ebene der Spitzen der Zähne und zur Längsausdehnung der Zähne ausgerichtet ist und an einer seitlichen Führungsfläche an einem der beiden die Zahnleisten aufweisenden Bauteile anliegt. Die Führungsfläche weist eine Neigung auf, die etwa der Flankenneigung der Zähne entspricht, und der Führungsstift wird von einer federnden Klammer in eine Position vorgespannt, in der er die Spitzen der Zähne überragt.

Wenn die Zahnleisten in einer "Kopf auf Kopf"-Stellung aufeinander zugeführt werden, kommt der Führungsstift zwischen zwei Zähne der gegenüberliegenden Zahnleiste zu liegen und in der Folge wird der Führungsstift entlang der Führungsfläche verschoben, wodurch die den Führungsstift aufweisende Zahnleiste zwangsweise seitlich verschoben wird. Bei einem Schließen der Verriegelungsvorrichtung in einer direkt gegenüberliegenden Position der Spitzen der Zähne der beiden Zahnleisten wird somit die den Führungsstift aufweisende Zahnleiste so weit seitlich verschoben, daß ein Eingriff der Zähne der beiden Zahnleisten ermöglicht wird. Allerdings sind auch bei dieser Einrichtung Stellungen der beiden Zahnleisten möglich, - wenn der Führungsstift im Bereich der Spitze eines der gegenüberliegenden Zähne auf diesen auftrifft, - in der beim Schließen der beiden Zahnleisten kein vollständiger Eingriff der Zähne erreicht wird, sondem die Zähne im Bereich ihrer Spitzen aneinander anliegen und das weitere Zusammenführen der beiden Zahnleisten blockiert wird.

Aufgabe der Erfindung ist es, eine Verriegelungsvorrichtung der eingangs genannten Art bereitzustellen, durch welche in zuverlässiger Weise ein vollständiger Eingriff der Zahnleisten beim Schließen der Verriegelungsvorrichtung erreicht wird, und zwar in jeder beliebigen Ausgangslage der beiden Bauteile. Erfindungsgemäß gelingt dies bei einer Verriegelungsvorrichtung der eingangs genannten Art dadurch, daß das Stellteil verschiebbar in einem ersten der beiden Bauteile gelagert ist und mindestens einen Zahn aufweist, dessen Spitze bei einer direkt gegenüberliegenden Position der Spitzen der Zähne der beiden Zahnleisten einer der Seitenflanken eines der Zähne der Zahnleiste des zweiten Bauteils gegenüberliegt.

Wenn die Spanneinrichtung in einer "Kopf auf Kopf"-Stellung der Zähne der beiden Zahnleisten geschlossen wird, trifft zunächst die Spitze des mindestens einen Zahns des Stellteils auf eine Seitenflanke eines der Zähne der Zahnleiste des zweiten Bauteils und verschiebt dadurch die beiden Bauteile in Richtung parallel zur Ebene der Spitzen der Zähne relativ zueinander, wobei die Spitze des Zahns des Stellteits entlang der Seitenflanke des Zahns der Zahnleiste nach unten gleitet, bis er den Talboden zwischen zwei Zähnen der Zahnleiste erreicht. In der Folge wird das Stellteil in Richtung senkrecht zur Ebene der Spitzen der Zähne der Zahnleisten im ersten Bauteil, in dem es gelagert ist, nach innen verschoben gegen die Kraft einer Feder, bis die Zähne der beiden Zahnleisten vollständig miteinander in Eingriff stehen. Die Kraft der das Stellteil vorspannenden Feder ist dabei so groß bemessen, daß die seitliche Verschiebung der beiden Bauteile erfolgt, bevor das Stellteil gegen die Kraft der Feder nach innen geschoben wird. Wenn die relative Lage der beiden Bauteile beim Schließen der Spanneinrichtung gerade derart ist, daß die Spitze des Zahnes des Stellteils auf eine Spitze eines Zahnes der gegenüberliegenden Zahnleiste trifft, so wird das Stellteil ohne vorherige relative seitliche Verschiebung der beiden Bauteile nach innen gedrückt und die beiden Zahnleisten gelangen in einer Weise miteinander in Eingriff, wie dies auch ohne ein Stellteil erfolgen würde.

In einer bevorzugten Ausführungsform der Erfindung ist eine der Seitenflanken des Zahnes des Stellteils flacher ausgebildet als die andere der Seitenflanken. Vorzugsweise weisen die Seitenflanken der Zähne der gegenüberliegenden Zahnleiste, die an diese flachere Seitenflanke des Zahnes des Stellteils zur Anlage kommen können, ebenfalls zumindest in einem der Spitze des jeweiligen Zahns benachbarten Abschnitt eine flachere Neigung auf. Durch die flachere Ausbildung einer der Seitenflanken des Zahns des Stellteils bzw. die flacheren Abschnitte der Zähne der gegenüberliegenden Zahnleiste wird das Niederdrücken des Stellteils erleichtert, wenn die Spanneinrichtung in einer Stellung der Bauteile geschlossen wird, in welcher keine seitliche Verschiebung durch den Zahn des Stellteils erforderlich ist.

Weitere Vorteile und Einzelheiten der Erfindung werden im folgenden anhand der beiliegenden Zeichnung erläutert. In dieser zeigen:
- Die Fig. 1 bis 3: schematische Darstellungen zur Erläuterung der Funktionsweise der erfindungsgemäßen Einrichtung;
- Fig. 4: einen Querschnitt und
- Fig. 5: einen Längsschnitt - Schnittlinie II-II in Fig. 4 durch ein Ausführungsbeispiel einer Lenksäule, im Zusammenhang mit der die erfindungsgemäße Vorrichtung einsetzbar ist;
- Fig. 6: das Profilstück in Untersicht;
- die Fig. 7 bis 9: die die Zahnleisten, in denen erfindungsgemäße Stellteile gelagert sind, aufweisende Kulisse in Draufsicht, Seitenansicht und Ansicht;
- Fig. 10: ein Detail der Führungsschiene;
- Fig. 11: in Schrägsicht die andere Kulisse und
- Fig. 12: einen Längsschnitt analog Flg. 5 eines weiteren Ausführungsbeispiel einer Lenksäule mit einer erfindungsgemäßen Verriegelungssvorrichtung.

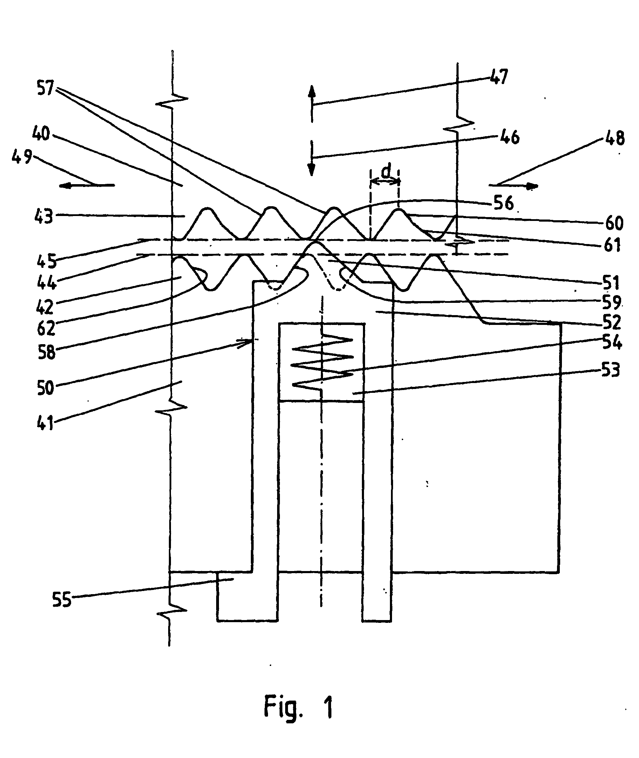

Zunächst soll die Funktionsweise der erfindungsgemäßen Einrichtung anhand der schematischen Darstellungen der Fig. 1 bis 3 erläutert werden. Zwei Bauteile weisen einander gegenüberliegende Zahnungen in Form von Zahnleisten 42, 43 auf. Die Spitzen der Zähne der beiden Zahnleisten 42, 43 liegen jeweils in einer Ebene 44, 45, die parallel zueinander liegen. Über eine in den Fig. 1 bis 3 nicht dargestellte Spanneinrichtung ist das Bauteil 40 in Richtung der Pfeile 46, 47 senkrecht zu den Ebenen 44, 45 auf das Bauteil 41 zu und von diesem weg bewegbar. Im geöffneten Zustand der Spanneinrichtung sind die beiden Zahnleisten 42, 43 voneinander beabstandet (der Abstand der beiden Bauteile 40, 41 ist hierbei etwas größer als in Fig. 1 dargestellt) und das Bauteil 40 ist gegenüber dem Bauteil 41 in Richtung der Pfeile 48, 49 im wesentlichen senkrecht (d. h. innerhalb von +/- 10° zur Senkrechten) zur Längsausdehnung der Zähne und parallel zu den Ebenen 44, 45 verschiebbar gelagert. Es ist hierfür eine entsprechende in den Fig. 1 bis 3 nicht dargestellte Führung des Bauteils 40 und/oder des Bauteils 41 vorgesehen. Eines der beiden Bauteile 40, 41 wird meist ortsfest angeordnet sein.

Beim Schließen der Spanneinrichtung wird das zweite Bauteil 40 in Richtung des Pfeiles 46 gegen das erste Bauteil 41 gedrückt, und die Zähne der Zahnleisten 42, 43 werden miteinander in Eingriff gebracht. In der Stellung der beiden Bauteile gemäß Fig. 1 befinden sich dabei die Spitzen der Zähne der beiden Zahnteisten in einer direkt gegenüberliegenden Position, die auch als "Kopf auf Kopf"-Stellung bezeichnet wird. Ohne besondere Maßnahmen wäre in dieser Stellung der beiden Bauteile 40, 41 ein ordnungsgemäßes Schließen der Spanneinrichtung und miteinander in Eingriff Bringen der Zähne der beiden Zahnleisten 42, 43 nicht möglich. Im ersten Bauteil 41 ist ein Stellteil 50 in einer Richtung parallel zur Richtung des Zusammen- und Auseinanderführens (Pfeile 46, 47) der beiden Bauteile 40, 41 mittels der Spanneinrichtung verschiebbar gelagert. Dieses Stellteil 50 weist einen Zahn 51 auf, der an einem Schaft 52 angeordnet ist, welcher in Seitenansicht gesehen U-förmig ausgebildet ist, mit zwei seitlichen Schenkeln, die von einem den Zahn 51 tragenden Brückenschenkel verbunden werden. Der Schaft 52 ist in einer entsprechenden Ausnehmung im Bauteil 41 verschiebbar gelagert, welche Hohlräume zum Durchtritt der Seitenschenkel des Schaftes 52 und einen größeren Hohlraum 53 umfaßt, in welchem sich der Brückenschenkel des Schafts 52 verschieben kann. In diesem Hohlraum 53 ist eine sich am Brückenschenkel abstützende Feder 54 vorgesehen, die hier als Schraubenfeder ausgebildet ist, beispielsweise aber auch in Form eines Blattfederpaketes realisiert werden kann. Zur Begrenzung der nach außen vorgespannten Stellung des Stellteils 50 ist an einem der Seitenschenkel des Schaftes 52 ein als Anschlag 55 wirkender seitlicher Fortsatz vorgesehen. Auch mehrere Federn 54 können vorgesehen sein. Die eine oder mehreren Federn 54 können auch von anderer Stelle über einen Hebel auf das Stellteil 50 wirken.

In der nach außen vorgespannten Stellung des Stellteils 50 überragt die Spitze des Zahns 51 die Ebene 44 der Spitzen der Zähne der Zahnleiste 42. In der in Fig. 1 dargestellten "Kopf auf Kopf'-Stellung der Zähne der Zahnleisten 42, 43 liegt die Spitze des Zahns 51 des Stellteils 50 einer Seitenflanke 57 eines der Zähne der Zahnleiste 43 gegenüber. Der seitliche Versatz der Spitze 56 des Zahns 51 zur Spitze des Zahns der gegenüberliegenden Zahnleiste 43 beträgt dabei weniger als die Hälfte des in Richtung parallel zur Ebene 45 gemessenen Abstandes d zwischen einer Spitze eines Zahns der Zahnleiste 43 und einem Tal zwischen zwei solchen Zähnen. Bevorzugterweise beträgt dieser Versatz etwa ein Viertel des genannten Abstandes d.

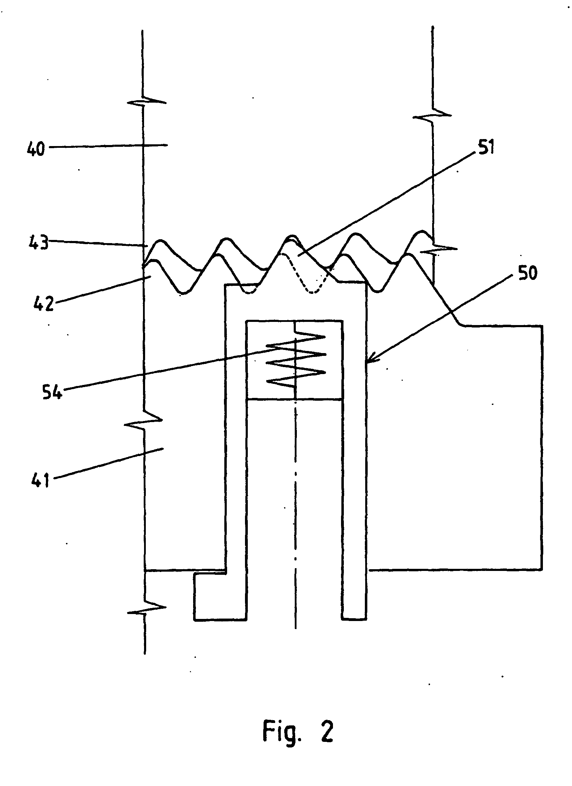

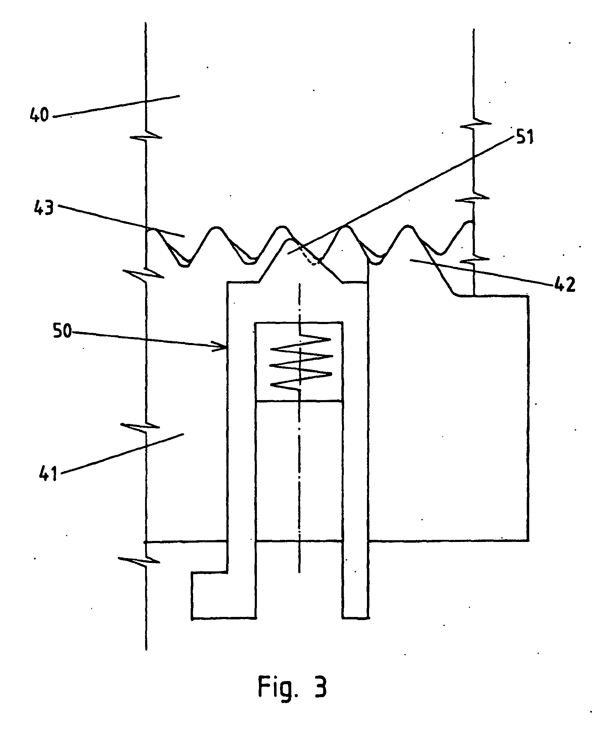

Wird ausgehend von der in Fig. 1 dargestellten Stellung das Bauteil 40 weiter in Richtung des Pfeiles 46 auf das Bauteil 41 zubewegt, so trifft die Spitze 56 des Zahns 51 auf die Seitenflanke 57 des Zahns der Zahnleiste 43 bzw. die Spitze des Zahns der Zahnleiste 43 auf die Seitenflanke 58 des Zahns 51 des Stellteils 50 und die beiden Seitenflanken 57, 58 gleiten in der weiteren Folge unter seitlicher Verschiebung des Bauteils 40 in Richtung des Pfeils 49 aneinander ab. Die Feder 54 muß so stark sein, daß dieses seitliche Verstellen durch den Vorstand der Spitze 56 erreicht wird, ohne daß der Zahn 51 in dieser Phase gegen die Kraft der Feder 54 nach innen eingedrückt wird. In Fig. 2 ist die Stellung dargestellt, kurz bevor die Spitze 56 des Zahns 51 des Stellteils 50 den Talboden zwischen zwei Zähnen der Zahnleiste 43 erreicht. Sobald dies der Fall ist, wird der Zahn 51 in der weiteren Folge des Zusammenschiebens der beiden Bauteile 40, 41 gegen die Kraft der Feder 54 einwärts verschoben, wobei nach wie vor eine seitliche Verschiebung des Bauteils 40 in Richtung des Pfeils 49 stattfindet. Die Endlage, in der die Zahnleisten 42, 43 der beiden Bauteile 40, 41 vollständig in Eingriff stehen, ist in Fig. 3 dargestellt. In dieser Endlage liegt die Spitze 56 des Zahns 51 unterhalb der Ebene 44 der Spitzen der Zähne der Zahnleiste 42.

Die beiden Seitenflanken 58, 59 des Zahns 51 des Stellteils 50 weisen unterschiedliche Neigungen auf. Die Seitenflanke 59 ist dabei flacher ausgebildet als die Seitenflanke 58, welche parallel zu den Seitenflanken 57 der Zähne der Zahnleiste 43 liegt. Die andere Seitenflanke der Zähne der Zahnleiste 43 weist zwei Abschnitte 60, 61 mit unterschiedlichen Neigungen auf. Die der jeweiligen Basis des Zahns benachbarten Abschnitte 61 weisen dabei eine flachere Neigung auf und liegen parallel zur Seitenflanke 59 des Zahns 51 des Stellteils 50. Die den Spitzen der Zähne benachbarten steileren Abschnitte 60 liegen parallel zu den Seitenflanken 62 der Zähne der Zahnleiste 42, zu deren Anlage sie im geschlossenen Zustand der Stelleinrichtung bestimmt sind. Die beiden Abschnitte 60, 61 schließen dabei einen stumpfen Winkel miteinander ein. Falls vor dem Schließen der Spanneinrichtung die beiden Bauteile 40, 41 eine solche Lage einnehmen, daß die Spitze eines der Zähne der Zahnleiste 43 der flacheren Seitenflanke 59 des Zahnes 51 des Stellteils 50 gegenüberliegt, so treffen beim Schließen der Spanneinrichtung der flache Abschnitt 61 des Zahns der Zahnleiste 43 und die flache Seitenflanke 59 des Zahns 51 des Stellteils 50 aufeinander. Dadurch wird die in Rich-tung senkrecht zur Ebene 44, d.h. in Richtung der Verschiebbarkeit des Stellteils 50 wirkende Kraftkomponente gegenüber der in seitlicher Richtung (in Richtung des Pfeils 48) wirkenden Kraftkomponente erhöht. Eine seitliche Verschiebung des Bauteils 40 durch den Zahn 51 des Stellteils ist in dieser Stellung der Bauteile 40, 41 nicht erforderlich, und durch die Erhöhung der Kraftkomponente in die Verschieberichtung des Stellteils 50 wird das Niederdrücken des Zahns 51 beim Zusammenführen der Bauteile 40, 41 in dieser Lage erleichtert.

Die flacheren Abschnitte 61 der Zähne der Zahnleiste 43 können prinzipiell auch entfallen und diese Zähne können wie die gegenüberliegenden Zähne der Zahnleiste 42 ausgebildet sein.

Anstelle des gezeigten einzelnen Zahns 51 des Stellteils 50 könnte das Stellteil auch zwei oder mehrere solcher Zähne aufweisen, die jeweils dieselbe Ausrichtung in Bezug auf die Zähne der gegenüberliegenden Zahnleiste 43 aufweisen. Der Zahn 51 des Stellteils kann sich über einen Teil oder über die gesamte Länge der Längsausdehnung der Zähne der Zahnleiste 42 (senkrecht zur Zeichenebene der Fig. 1 bis 3) erstrecken. Im gezeigten Ausführungsbeispiel entspricht die Neigung der Seitenflanke 58 des Zahns 51 der Neigung der auf der gleichen Seite liegenden Seitenflanke der Zähne der Zahnleiste 42.

Die Darstellung der Fig. 1 bis 3 ist nur schematisch. Nicht dargestellt ist beispielsweise die Führung des Bauteils 40 in Richtung senkrecht zur Längsausdehnung der Zähne.

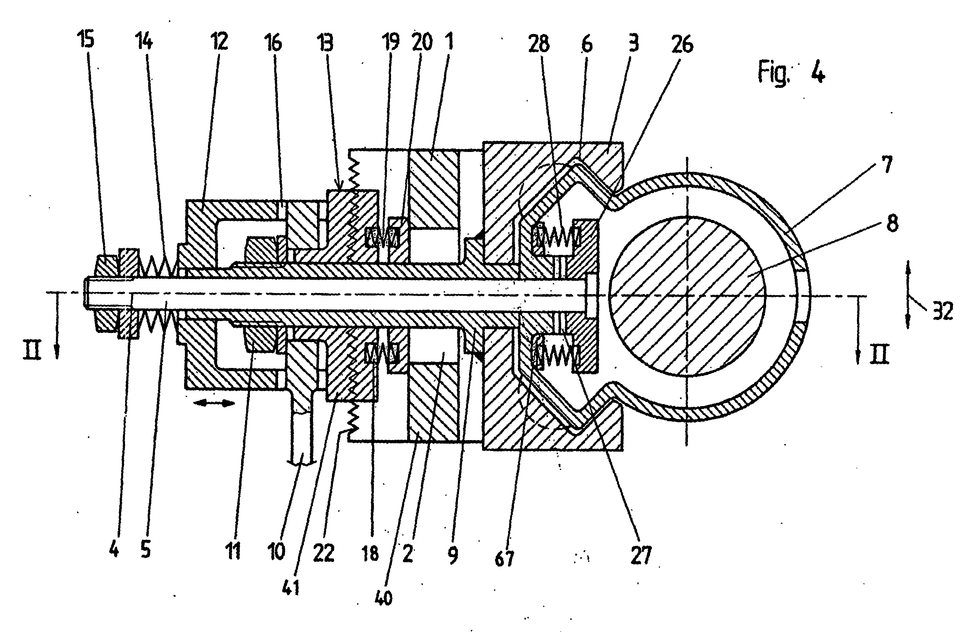

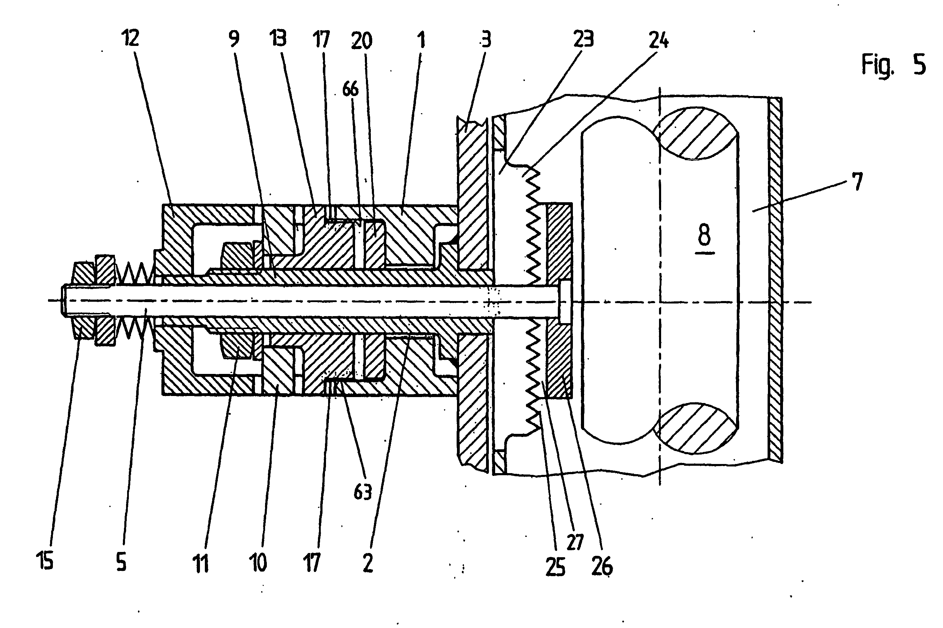

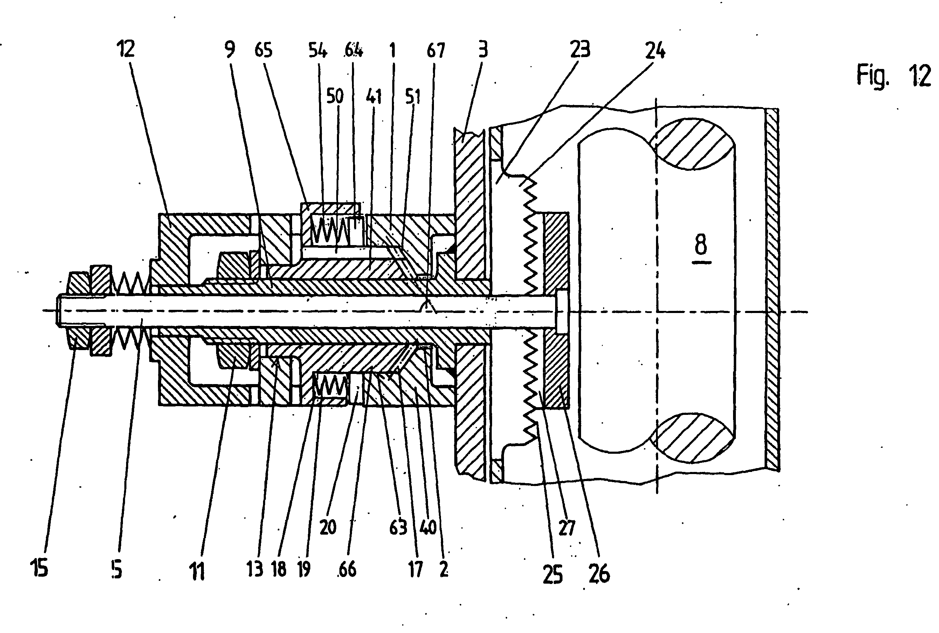

Die Fig. 4 bis 11 zeigen nun in schematischer Darstellung ein mögliches Anwendungsbeispiel für eine erfindungsgemäße Verriegelungsvorrichtung im Zusammenhang mit einer höhen- bzw. neigungsverstellbaren und längenverstellbaren Lenksäule. Die Lenksäule umfaßt ein chassisfestes Konsolenteil 1 mit einer vertikalen Langlochausnehmung 2, das einen im wesentlichen H-förmigen Querschnitt (Fig. 5) hat. Am Konsolenteil 1 liegt an dessen einer Seite eine Führungsschiene 3 an, die um eine hinter der Zeichenebene liegenden Achse in einer rechtwinkelig zur Zeichenebene stehenden Ebene um einige Winkelgrade verschwenkbar ist. Diese Achse liegt parallel zur Achse 4 des Bolzens 5. Diese Führungsschiene 3 besitzt eine hinterschnittene Führungsnut 6, die ein Mantelrohr 7 aufnimmt, in welchem eine längenveränderbare Lenkspindel 8 gelagert ist, die hier nur angedeutet ist. Dieses Mantelrohr 7 besitzt einen seitlichen, trapezartigen Ansatz, der von der Führungsnut 6 formschlüssig übergriffen ist. An dieser Führungsschiene 3 ist eine Rohrachse 9 festgelegt, die die Langlochausnehmung 2 im chassisfesten Konsolenteil 1 durchsetzt. Auf dieser Rohrachse 9 ist ein um diese verschwenkbarer Betätigungshebel 10 gelagert. Dieser Betätigungshebel 10 liegt einseitig an einem hier als Mutter ausgebildeten Anschlag 11 an, der mit der Rohrachse 9 fest verbunden ist. Zu beiden Seiten dieses Betätigungshebels 10 sind Kulissen 12 und 13 vorgesehen, die auf der Rohrachse 9 axial verschiebbar, aber gegen Verdrehung gesichert sind. Die eine topfartig ausgebildete Kulisse 12 (Fig. 11) ist über ein Federpaket 14 gegen einen Anschlag 15 abgestützt, der seinerseits fest mit dem Ende des Bolzens 5 verbunden ist, der in der Rohrachse 9 liegt und der mit seinem einen Ende aus dieser Rohrachse vorkragt. Die Stirnseite 16 (Fig. 11) dieser topfartigen Kulisse 12 ist mit Schrägflächen bestückt, die an korrespondierenden Schrägflächen des Betätigungshebels 10 anliegen, so daß eine Verdrehung des Betätigungshebels 10 um die Achse 4 eine Axiatverschiebung der Kulisse 12 auf der Rohrachse 9 bewirkt.

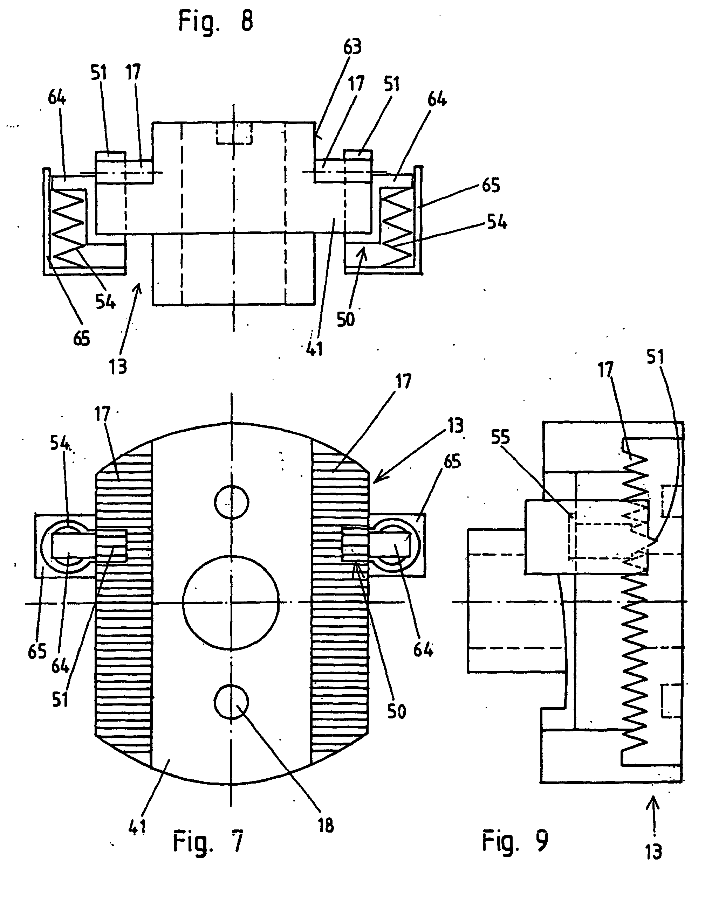

Die zweite Kulisse 13, die auf der Rohrachse 9 axial verschiebbar, gegenüber dieser jedoch verdrehgesichert ist, besitzt zwei Zahnleisten 17 (Fig. 7) und zwischen den Zahnleisten Sacklochbohrungen 18, die hier Federn 19 aufnehmen, die sich mit ihrem einen Ende an einem Gleitteller 20 abstützen, der seinerseits am chassisfesten Konsolenteil 1 anliegt. Die dem Betätigungshebel 10 zugewandte Stirnseite dieser Kulisse 13 ist ebenfalls mit Schrägflächen bestückt, die an dazu korrespondierenden Schrägflächen am Betätigungshebel 10 anliegen. Diese stirnseitigen Schrägflächen an den beiden Kulissen 12 und 13 und am Betätigungshebel 10 sind so ausgebildet, daß durch die Verschwenkung des Betätigungshebels 10 in eine Richtung die beiden Kulissen von diesem Betätigungshebel 10 weggedrängt oder weggeschoben werden. Die Zahnleisten 17 der Kulisse 13 greifen in Zahnleisten 22 ein, die am chassisfesten Bauteil 1 angeordnet sind.

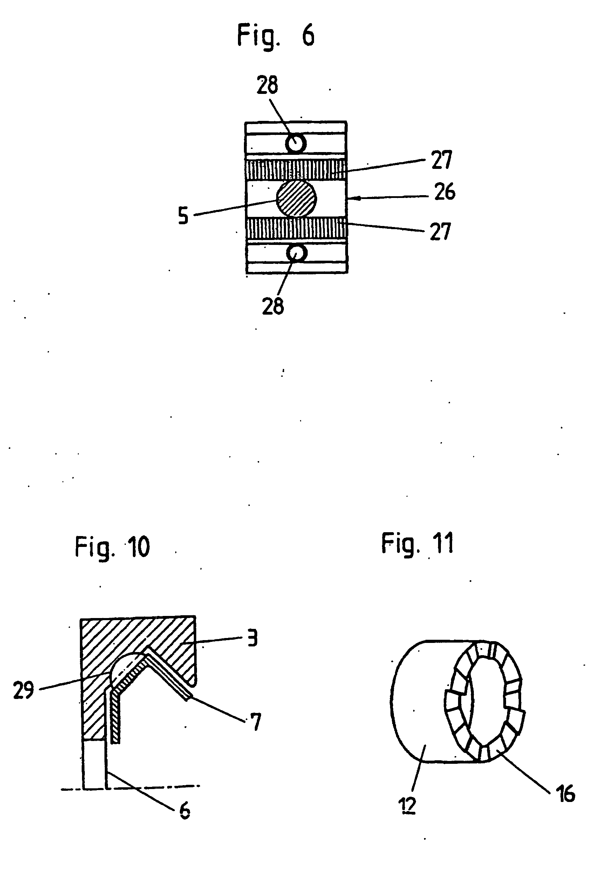

Im Mantelrohr 7, und zwar in dem von der Führungsnut 6 aufgenommenen Abschnitt, ist eine in Längsrichtung des Mantelrohres 7 verlaufende Langlochausnehmung 23 (Fig. 5) vorgesehen. Diese wird von am Mantelrohr 7 festgelegten Zahnleisten 24 begrenzt, die auf ihren der Rohrinnenseite zugewandten Stirnflächen Zahnungen 25 aufweisen. Der Bolzen 5, der durch diese Langlochausnehmung 23 in das Innere des Mantelrohres 7 ragt, ist mit einem Profilstück 26 verbunden, das einen im wesentlichen T-förmigen Querschnitt (Fig. 4) hat, wobei an der Unterseite dieses Profilstückes 26 (Fig. 6) Zahnleisten 27 angeformt sind, die mit der Zahnung 25 an den Zahnleisten 24 kämmen. Zwischen den auskragenden Schultern dieses Profilstückes 26 und der Innenseite des Mantelrohres 7 sind vorgespannte Federn 28 auf Gleittellem 67 angeordnet (Fig. 4).

Eine Spanneinrichtung zum Öffnen und Schließen der Verriegelungsvorrichtung wird bei diesem Ausführungsbeispiel der Lenksäule somit vom Betätigungshebel 10 zusammen mit den Kulissen 12, 13 und dem in der Rohrachse 9 verschiebbaren Bolzen 5 gebildet.

In der betriebsmäßigen Stellung ist der Betätigungshebel 10 in einer solchen Lage, daß die beiden Kulissen 12 und 13 von ihm weggedrückt sind, die Kulisse 12 nach links, die Kulisse 13 nach rechts. Dadurch sind die Verzahnungen des Konsolenteils 1 und der Kulisse 13 unter der Vorspannung der Feder 19 fest aneinandergedrückt. Andererseits zieht die Kulisse 12 über das Federpaket 14 und den Anschlag 15 den Bolzen 5 nach links und drückt dabei das Profilstück 26 bzw. dessen Zahnleisten 27 in die Zahnung 25 der Zahnleisten 24 der Ränder der Langlochausnehmung 23 des Mantelrohres 7. Damit ist die Lenksäule, bestehend aus Mantelrohr 7 und Lenkspindel 8, gegenüber dem chassisfesten Konsolenteil 1 verspannt.

Soll die Lenksäule in ihrer Länge (rechtwinkelig zur Zeichenebene in Fig. 5) und /oder in ihrer Neigung (Pfeil 32 - Fig. 4) verstellt werden, so wird der Betätigungshebel 10 verschwenkt (rechtwinkelig zur Zeichenebene in Fig. 1), wodurch die Kulissen 12 und 13 in axialer Richtung Spiel erhalten, so daß die Vorspannung der Federn 19 bzw. 28 wirksam wird mit der Folge, daß die bislang in Eingriff miteinander stehenden Verzahnungen außer Eingriff gelangen. Nun kann das Mantelrohr in seiner Führungsnut 6 verschoben werden bzw. kann die Führungsschiene 3 um ihre hinter der Zeichenebene liegende Achse verschwenkt werden (Pfeil 32). Die nun von den erwähnten Teilen eingenommene Lage wird dadurch arretiert, daß der Betätigungshebel 10 wiederum in seine Ausgangslage zurück verschwenkt wird und dabei die Kulissen 12 und 13 von ihm wegdrängt, wodurch unter neuerlicher Vorspannung der Federn 19 und 28 die Zahnungen wieder in Eingriff gelangen.

Damit auch bei einer "Kopf auf Kopf'-Stellung der Zähne der Zahnleisten ein sicherer und vollständiger Eingriff der Zähne der Zahnleisten erreicht wird, ist in zumindest einer der gegenüberliegenden Zahnleisten 24, 27 für die Verriegelung der Längsverstellung und/oder in zumindest einer der gegenüberliegenden Zahnleisten 17, 22 für die Verriegelung der Höhenverstellung zumindest ein erfindungsgemäßes Stellteil der anhand der Fig. 1 bis 3 beschriebenen Art vorgesehen. Beispielsweise ist dieses Stellteil 50 mit dem mindestens einen Zahn 51 in einer oder beiden Zahnleisten 17 der Kulisse 13 und in einer oder beiden Zahnleisten 27 des Profilstücks 26 vorgesehen.

In den Fig. sind lediglich für die Verriegelung der Höhenverstellung der Lenksäule solche Stellteile dargestellt. Die Kulisse 13 entspricht hierbei dem Bauteil 41 der Fig. 1 bis 3 (das jetzt aber verschiebbar gelagert ist) und das chassisfeste Konsolenteil 1 bildet das Bauteil 40 der Fig. 1 bis 3. Die Stellteile 50 in den beiden Zahnleisten 17 sind in den Fig. 7 bis 9 schematisch eingezeichnet. Die Stellteile 50 sind hier mit einem seitlich auskragenden Arm 64 dargestellt, der in ein Gehäuse 65 ragt. Zwischen dem Arm 64 und dem Gehäuse 65 ist in einer entsprechenden Ausnehmung im Gehäuse 65 eine Druckfeder 54 angeordnet. Der Arm 64 und das Gehäuse 65 sind in den Fig. 4 und 5 der Einfachheit halber nicht dargestellt.

Es könnte auch nur in einer der beiden Zahnleisten 17 ein Stellteil 50 angeordnet sein. Die Zähne der anderen Zahnleiste 17 und der mit ihr zusammenwirkenden Zahnleiste des Konsolenteils 1 könnten in diesem Fall in herkömmlicher Weise ausgebildet sein.

Um ein Verscheren des Bauteils 41 bzw. der Kulisse 13 zu verhindern ist eine Führung des Bauteils 41 bzw. der Kulisse 13 mit einem geringen Spiel erforderlich. Zu diesem Zweck sind beim gezeigten Ausführungsbeispiel an der Kulisse 13 Führungsflächen 63 vorgesehen, die mit Führungsflächen 66 am Konsolenteil 1 zusammenwirken.

Anstelle in der Kulisse 13 könnten ein oder mehrere Stellteile 50 auch in den Zahnleisten des ortsfesten Konsolenteils 1 angeordnet sein.

Anstelle von zwei Zahnleisten 17 der Kulisse 13 und zwei mit diesen zusammenwirkenden Zahnleisten des Konsolenteils 1 könnte auch jeweils nur eine Zahnleiste vorgesehen sein.

Auch in den Zahnleisten 24 und/oder in der Zahnung 27 können in analoger Weise Stellteile 50 gelagert sein.

Ein etwas modifiziertes Ausführungsbeispiel der Erfindung ist in Fig. 12 dargestellt. Die Kulisse 13 und das Konsolenteil 1 (entsprechend den Bauteilen 41, 40) weisen wiederum beidseitig des Bolzens 5 angeordnete Zahnleisten 17, 22 auf, wobei nur in der auf einer Seite des Bolzens 5 angeordneten Zahnleiste 17 der Kulisse 13 ein Stellteil 50 angeordnet ist. Die Ebenen der Spitzen der Zähne der beiden Zahnleisten 17, 22 einerseits der Kulisse 13, andererseits des Konsolenteils 1 sind im Schnitt entsprechend Fig. 12 V-förmig zueinander angeordnet, wobei die Zahnleisten 17 der Kulisse 13 auf der Außenseite der V-Form und die des Konsolenteils 1 auf der Innenseite der V-Form angeordnet sind. Auf der dem Stellteil 50 im Bezug auf die Achse 4 gegenüberliegenden Seite des Bauteils 13 und des Konsolenteils 1 sind zusammenwirkende Führungsflächen 66, 63 vorgesehen. Durch den von der Senkrechten auf die Achse 4 abweichenden Winkel 67, den die Ebene der Spitzen der Zähne der Zahnleisten 17, 22 mit der Achse 4 einschließen, wird beim Zusammenfahren der beiden Zahnleisten, wenn das Stellteil 50 wirksam wird, eine seitlich auf die Kulisse 13 bzw. das Bauteil 41 wirkende Kraft ausgeübt, so daß die Führungsfläche 63 an die Führungsfläche 66 angepreßt wird. Einer Verdrehung der Kulisse 13 gegenüber dem Konsolenteil 1 wird dadurch entgegengewirkt. Auch wird der Wirkungsweg des Zahns 51 des Stellteils 50 aufgrund dieser zur Senkrechten auf die Achse 4 geneigten Anordnung vergrößert. Die im Sinne einer Verscherung der Zähne der Zahnleisten 17 der Kulisse 13 gegenüber den Zähnen der Zahnleiste 22 des Konsolenteils 1 wirkende Kraft wird zusätzlich aufgrund des relativ geringen Abstandes der Zahnleisten 17, 22 von der Achse 4 verringert.

Denkbar und möglich wäre es auch, die V-Form umgekehrt auszubilden, wobei die Zahnleisten des Konsolenteils 1 auf den Außenseiten der V-Form angeordnet sind (pfeilförmig ausgebildt sind) und die Zahnleisten 17 der Kulisse 13 auf der Innenseite der V-Form liegen.

Auch die Zahnleisten 24, 27 könnten in analoger Weise ausgebildet sein und V-förmig (im Schnitt entsprechend Fig. 4) angeordnet sein.

Die Erfindung ist nicht auf die gezeigten Ausführungsbeispiele beschränkt. Beispielsweise kann ein erfindungsgemäßes Stellteil auch im Zusammenhang mit in einer zum Vergleich zu der gezeigten Lenksäule unterschiedlich aufgebauten Lenksäule verwendet werden, bei der die Höhenverstellung und/oder Längenverstellung durch miteinander in Eingriff bringbare Zahnleisten verriegelt wird. Zur Verriegelung der Zahnleisten ist jeweils eine Spanneinrichtung vorgesehen, die in unterschiedlicher Weise ausgebildet sein kann. Derartige Lenksäulen sind in verschiedenen Ausführungen bekannt. Der spezielle Aufbau der Lenksäule ist nicht Gegenstand der vorliegenden Erfindung. Auch im Zusammenhang mit anderen Einrichtungen mit relativ zueinander verschiebbaren und in eingestellten Positionen miteinander verriegelbaren Bauteilen ist die Verwendung einer erfindungsgemäßen Verriegelungsvorrichtung denkbar und möglich.

### Legende zu den Hinweisziffern:

- 1: chassisfestes Konsolenteil
- 2: Langlochausnehmung
- 3: Führungsschiene
- 4: Achse
- 5: Bolzen
- 6: Führungsnut
- 7: Mantelrohr
- 8: Lenkspindel
- 9: Rohrachse
- 10: Betätigungshebel
- 11: Anschlag
- 12: Kulisse
- 13: Kulisse
- 14: Federpaket
- 15: Anschlag
- 16: Stirnseite
- 17: Zahnleiste
- 18: Sacklochbohrung
- 19: Feder
- 20: Gleitteller
- 21: Stirnseite
- 22: Zahnleiste
- 23: Langlochausnehmung
- 24: Zahnleiste
- 25: Zahnung
- 26: Profilstück
- 27: Zahnleiste
- 28: Feder
- 29: Vertiefung
- 30: Kugelkalotte
- 31: Sollbruchstelle
- 32: Pfeil
- 33: Sollbruchstelle
- 40: Bauteil
- 41: Bauteil
- 42: Zahnleiste
- 43: Zahnleiste
- 44: Ebene
- 45: Ebene
- 46: Pfeil
- 47: Pfeil
- 48: Pfeil
- 49: Pfeil
- 50: Stellteil
- 51: Zahn
- 52: Schaft
- 53: Hohlraum
- 54: Feder
- 55: Anschlag
- 56: Spitze
- 57: Seitenflanke
- 58: Seitenflanke
- 59: Seitenflanke
- 60: Abschnitt
- 61: Abschnitt
- 62: Seitenflanke

## Patentansprüche

1. Verriegelungsvorrichtung für zwei relativ zueinander verschiebbar gelagerte Bauteile, insbesondere Teile einer höhen- bzw. neigungsverstellbaren und/oder längenverstellbaren Lenksäule, an denen gegenüberliegende Zahnleisten mit nebeneinanderliegenden Zähnen angeordnet sind, wobei eine Spanneinrichtung vorgesehen ist, mittels der die Zähne der beiden Zahnleisten unter Zusammenführung der beiden Bauteile miteinander in Eingriff bringbar sind und in deren geöffnetem Zustand die beiden Zahnleisten voneinander beabstandet sind und die beiden Bauteile relativ zueinander verschiebbar sind, und wobei zur Verhinderung eines Aufeinandertreffens der Zahnspitzen der Zähne der gegenüberliegenden Zahnleisten beim Schließen der Spanneinrichtung zumindest an einer der Zahnleisten mindestens ein gegen die Kraft einer Feder verschiebbar gelagertes Stellteil vorgesehen ist, dessen von der Zahnleiste abgewandtes freies Ende in der nach außen vorgespannten Position des Stellteils über die Spitzen der Zähne hinausragt, **dadurch gekennzeichnet, daß** das Stellteil (50) verschiebbar in einem ersten (41) der beiden Bauteile (40, 41) gelagert ist und mindestens einen Zahn (51) aufweist, dessen Spitze (56) bei einer direkt gegenüberliegenden Position der Spitzen der Zähne der beiden Zahnleisten (42, 43) einer der Seitenflanken (57) eines der Zähne der Zahnleiste (43) des zweiten Bauteils (40) gegenüberliegt.

2. Verriegelungsvorrichtung nach Anspruch 1, **dadurch gekennzeichnet, daß** das zumindest eine Stellteil (50) von einem in eine Ausnehmung in der Zahnleiste (42) ragenden Schaft gebildet wird, an dessen freiem Ende der zumindest eine Zahn (51) angeordnet ist.

3. Verriegelungsvorrichtung nach Anspruch 2, **dadurch gekennzeichnet, daß** am Stellteil (50) mindestens eine als Druckfeder ausgebildete Feder (54) angreift, die den Schaft bei geöffneter Spannvorrichtung in seine von einem Anschlag (55) begrenzte vorgespannte Position nach außen verschiebt.

4. Verrieglungsvorrichtung nach einem der Ansprüche 1 bis 3, **dadurch gekennzeichnet, daß** bei einer direkt gegenüberliegenden Position der Spitzen der Zähne der beiden Zahnleisten (42, 43) die Spitze (56) des mindestens eines Zahnes (51) des Stellteils (50) um weniger als die Hälfte des in Richtung parallel zur Ebene (44) gemessenen Abstandes (d) zwischen einer Spitze eines Zahns der Zahnleiste (43) und einem Tal zwischen zwei Zähnen der Zahnleiste (43) zu einer Spitze eines Zahns der Zahnleiste (43) des gegenüberliegenden zweiten Bauteils (40) versetzt ist.

5. Verrieglungsvorrichtung nach Anspruch 4, **dadurch gekennzeichnet, daß** der Versatz der Spitze (56) des Zahnes (51) des Stellteils (50) zur Spitze des Zahns der Zahnleiste (43) des gegenüberliegenden zweiten Bauteils (40) wa ein Viertel dieses Abstandes (d) beträgt.

6. Verriegelungsvorrichtung nach einem der Ansprüche 1 bis 5, **dadurch gekennzeichnet, daß** die Kraft der Feder (54) so stark ist, daß beim Auftreffen der Spitze (56) des Zahnes (51) des Stellteils (50) auf die Seitenflanke (57) eines Zahns der Zahnleiste (43) beim Schließen der Spanneinrichtung in einer Ausrichtung der beiden Bauteile, in der die Spitzen der Zähne der beiden Zahnleisten (42, 43) einander direkt gegenüberliegen, die beiden Bauteile (40, 41) in eine Richtung parallel zu den Ebenen (44, 45) der Spitzen der Zähne der Zahnleisten (42, 43) ohne ein Niederdrücken des Zahns (51) verschoben werden, bis die Spitze (56) den Talboden zwischen zwei Zähnen der Zahnleiste (43) erreicht.

7. Verriegelungsvorrichtung nach einem der Ansprüche 1 bis 6, **dadurch gekennzeichnet, daß** die beiden Seitenflanken (58, 59) des Zahns (51) des Stellteils (50) mindestens in einem Abschnitt der Flankenerstreckungen voneinander unterschiedliche Neigungen aufweisen, wobei diejenige Seitenflanke (58) zumindest abschnittsweise steiler ausgebildet ist, die bei einer direkt gegenüberliegenden Position der Spitzen der Zähne der beiden Zahnleisten (42, 43) der Spitze eines der Zähne der Zahnleiste (43) des zweiten Bauteils (40) gegenüberliegt.

8. Verriegelungsvorrichtung nach einem der Ansprüche 1 bis 7, **dadurch gekennzeichnet, daß** die beiden Seitenflanken der Zähne der Zahnleiste (43) des zweiten Bauteils zumindest in einem Abschnitt der Flankenerstreckungen voneinander unterschiedliche Neigungen aufweisen, wobei diejenige Seitenflanke (57) insgesamt zumindest abschnittsweise steiler ausgebildet ist, die bei einer direkt gegenüberliegenden Position der Spitzen der Zähne der beiden Zahnleisten (42, 43) der Spitze (56) des Zahns (51) des Stellteils (50) gegenüberliegt.

9. Verriegelungsvorrichtung nach Anspruch 8, **dadurch gekennzeichnet, daß** die zumindest abschnittsweise flacher ausgebildeten Seitenflanken der Zähne der Zahnleiste (43) des zweiten Bauteils jeweils einen an das Tal zwischen zwei Zähnen anschließenden steileren Abschnitt (60) und einen der Spitze des Zahns benachbarten flacheren Abschnitt (61) aufweisen.

10. Verriegelungsvorrichtung nach Anspruch 9, **dadurch gekennzeichnet, daß** der flachere Abschnitt (61) parallel zur flacheren Seitenflanke (59) des Zahns (51) des Stellteils (50) ausgebildet ist.

11. Vorrichtung nach Anspruch 9 oder Anspruch 10, **dadurch gekennzeichnet, daß** die steileren Abschnitte (60) parallel zu den zur Anlage dieser Abschnitte vorgesehenen Seitenflanken (62) der Zähne der Zahnleiste (42) des ersten Bauteils (41) ausgebildet sind.

12. Verriegelungsvorrichtung nach einem der Ansprüche 7 bis 11, **dadurch gekennzeichnet, daß** die steilere Seitenflanke (58) des Zahns (51) des Stellteils (50) parallel zu den Seitenflanken (57) der Zähne der Zahnleiste (43) des ersten Bauteils ausgebildet ist, welche an diese steilere Seitenflanke (58) anlegbar sind.

13. Verriegelungsvorrichtung nach Anspruch 12, **dadurch gekennzeichnet, daß** die steilere Seitenflanke (58) des Zahns des Stellteils (50) in dessen ausgefahrener Position in Seitenansicht gesehen in etwa in einer Linie mit einer Seitenflanke eines Zahns der Zahnleiste (42) des ersten Bauteils (41) liegt und diese über die Seitenflanke des Zahns der Zahnleiste (42) hinaus fortsetzt.

14. Verriegelungsvorrichtung nach einem der Ansprüche 1 bis 13, **dadurch gekennzeichnet, daß** die Spanneinrichtung einen Bolzen (5) aufweist, dessen Achse (4) sich parallel zur Richtung des Zusammen- bzw. Auseinanderfahrens der beiden Bauteile (40, 41) erstreckt.

15. Verriegelungsvorrichtung nach Anspruch 14, **dadurch gekennzeichnet, daß** die Ebenen der Spitzen der Zähne der gegenüberliegenden Zahnleisten (17, 22) einen von der Senkrechten auf die Achse (4) abweichenden Winkel (67) mit der Achse (4) einschließen.

16. Verriegelungsvorrichtung nach Anspruch 15, **dadurch gekennzeichnet, daß** die Bauteile (40, 41) beidseitig des Bolzens (5) angeordnete Zahnleisten (17, 22) aufweisen, wobei nur in der auf einer Seite des Bolzens (5) angeordneten Zahnleiste (17) von einem der beiden Bauteile (40, 41) mindestens ein Stellteil (50) angeordnet ist und die Ebenen der Spitzen der Zähne der beiden Zahnleisten (17, 22) eines jeweiliegen Bauteils (40, 41) in einem parallel zur Längserstreckung der Zähne und parallel zur Achse (4) des Bolzens (5) liegenden Längsschnitt V-förmig zueinander angeordnet sind.

17. Verriegelungsvorrichtung nach Anspruch 16, **dadurch gekennzeichnet, daß** auf der dem Stellteil (50) in Bezug auf die Achse (4) gegenüberliegenden Seite des Bauteils (41) zusammenwirkende Führungsflächen (66, 63) der Bauteile (40, 41) vorgesehen sind.

18. Verriegelungsvorrichtung nach einem der Ansprüche 1 bis 17, **dadurch gekennzeichnet, daß** das Stellteil (50) in einer Richtung parallel zur Richtung des Zusammen- und Auseinanderfahrens der beiden Bauteile (40, 41 ) verschiebbar in einem der beiden Bauteile (40,41) gelagert ist.

19. Verriegelungsvorrichtung nach einem der Ansprüche 1 bis 18, **dadurch gekennzeichnet, daß** das Stellteil (50) mehrere Zähne aufweist, deren Seitenflanken (58, 59) parallel ausgebildet sind und deren Spitzen (56) einen Abstand voneinander aufweisen, der dem Abstand der Spitzen der Zähne der Zahnleiste (42) des ersten Bauteils (41) oder einem Vielfachen hiervon entspricht.

## Claims

1. A locking device for two members mounted movably relative to one another, in particular parts of a steering column which is adjustable in height or inclination and/or length, there being arranged on these members opposing toothed racks having teeth lying next to one another, there being provided a clamping device by means of which the teeth of the two toothed racks may be brought into engagement with one another, bringing together the two members, and in the opened condition whereof the two toothed racks are spaced from one another and the two members are movable relative to one another, and, in order to prevent the tips of the teeth of the opposing toothed racks from meeting when the clamping device is closed, there being provided at least at one of the toothed racks at least one actuating part mounted movably in opposition to the force of a spring whereof the free end remote from the toothed rack projects beyond the tips of the teeth in the outwardly prestressed position of the actuating part, **characterised in that** the actuating part (50) is mounted movably in a first one (41) of the two members (40, 41) and has at least one tooth (51) whereof, when the tips of the teeth of the two toothed racks (42, 43) are in the directly opposite position, the tip (56) is opposite one of the side flanks (57) of one of the teeth of the toothed rack (43) of the second member (40).

2. A locking device according to Claim 1, **characterised in that** the at least one actuating part (50) is formed by a shaft which projects into a recess in the toothed rack (42) and at the free end of which the at least one tooth (51) is arranged.

3. A locking device according to Claim 2, **characterised in that** at least one spring (54) in the form of a pressure spring acts on the actuating part (50) and, when the clamping device is opened, moves the shaft outwards into its prestressed position delimited by a stop (55).

4. A locking device according to one of Claims 1 to 3, **characterised in that**, when the tips of the teeth of the two toothed racks (42, 43) are in the directly opposite position, the tip (56) of the at least one tooth (51) of the actuating part (50) is offset from the tip of a tooth of the toothed rack (43) of the opposing second member (40) by less than half the spacing (d), measured in the direction parallel to the plane (44), between the tip of a tooth of the toothed rack (43) and a valley between two teeth of the toothed rack (43).

5. A locking device according to Claim 4, **characterised in that** the offset of the tip (56) of the tooth (51) of the actuating part (50) from the tip of the tooth of the toothed rack (43) of the opposing second member (40) is approximately a quarter of this spacing (d).

6. A locking device according to one of Claims 1 to 5, **characterised in that** the force of the spring (54) is so great that when the tip (56) of the tooth (51) of the actuating part (50) meets the side flank (57) of a tooth of the toothed rack (43) when the clamping device is closed in an alignment of the two members in which the tips of the teeth of the two toothed racks (42, 43) are directly opposite one another, the two members (40, 41) are moved in a direction parallel to the planes (44, 45) of the tips of the teeth of the toothed racks (42, 43) without depressing the tooth (51) until the tip (56) reaches the base of the valley between two teeth of the toothed rack (43).

7. A locking device according to one of Claims 1 to 6, **characterised in that** the two side flanks (58, 59) of the tooth (51) of the actuating part (50) are inclined at different angles from one another at least in one portion over which the flanks extend, with that side flank (58) which is opposite the tip of one of the teeth of the toothed rack (43) of the second member (40) when the tips of the teeth of the two toothed racks (42, 43) are in a directly opposite position being made steeper at least in some portions.

8. A locking device according to one of Claims 1 to 7, **characterised in that** the two side flanks of the teeth of the toothed rack (43) of the second member are inclined at different angles from one another at least in one portion over which the flanks extend, with that side flank (57) which is opposite the tip (56) of the tooth (51) of the actuating member (50) when the tips of the teeth of the two toothed racks (42, 43) are in a directly opposite position being made steeper overall, at least in some portions.

9. A locking device according to Claim 8, **characterised in that** those side flanks of the teeth of the toothed rack (43) of the second member which are made flatter at least in some portions each have a steeper portion (60) adjoining the valley between two teeth and a flatter portion (61) adjacent to the tip of the tooth.

10. A locking device according to Claim 9, **characterised in that** the flatter portion (61) is made parallel to the flatter side flank (59) of the tooth (51) of the actuating part (50).

11. A locking device according to Claim 9 or Claim 10, **characterised in that** the steeper portions (60) are made parallel to those side flanks (62) of the teeth of the toothed rack (42) of the first member (41) which are provided for these portions to abut against.

12. A locking device according to one of Claims 7 to 11, **characterised in that** the steeper side flank (58) of the tooth (51) of the actuating part (50) is made parallel to those side flanks (57) of the teeth of the toothed rack (43) of the first member which may abut against this steeper side flank (58).

13. A locking device according to Claim 12, **characterised in that** the steeper side flank (58) of the tooth of the actuating part (50) lies, in the extended position thereof and as seen in side view, approximately in a line with a side flank of a tooth of the toothed rack (42) of the first member (41) and prolongs this beyond the side flank of the tooth of the toothed rack (42).

14. A locking device according to one of Claims 1 to 13, **characterised in that** the clamping device has a bolt (5) whereof the axis (4) extends parallel to the direction in which the two members (40, 41) are brought towards one another and away from one another.

15. A locking device according to Claim 14, **characterised in that** the planes of the tips of the teeth of the opposing toothed racks (17, 22) form an angle (67) with the axis (4) which differs from the normal to the axis (4).

16. A locking device according to Claim 15, **characterised in that** the members (40, 41) have toothed racks (17, 22) arranged on either side of the bolt (5), with at least one actuating part (50) being arranged only **in that** toothed rack (17) of one of the two members (40, 41) which is arranged on one side of the bolt (5) and the planes of the tips of the teeth of the two toothed racks (17, 22) of each member (40, 41) being arranged in a V-shape with respect to one another in a longitudinal section lying parallel to the longitudinal extent of the teeth and parallel to the axis (4) of the bolt (5).

17. A locking device according to Claim 16, **characterised in that** cooperating guide surfaces (66, 63) of the members (40, 41) are provided on the opposite side of the member (41) to that with the actuating part (50) in relation to the axis (4).

18. A locking device according to one of Claims 1 to 17, **characterised in that** the actuating part (50) is mounted in one of the two members (40, 41) movable in a direction parallel to the direction in which the two members (40, 41) are brought towards one another and away from one another.

19. A locking device according to one of Claims 1 to 18, **characterised in that** the actuating part (50) has a plurality of teeth whereof the side flanks (58, 59) are made parallel and whereof the tips (56) are at a spacing from one another which corresponds to the spacing between the tips of the teeth of the toothed rack (42) of the first member (41) or a multiple thereof.

## Revendications

1. Dispositif de verrouillage pour deux éléments coulissant relativement l'un par rapport à l'autre, notamment des parties d'une colonne de direction mobiles en hauteur, ou en inclinaison, et/ou en longueur, sur lesquelles sont disposées des dentures opposées comportant des dents placées les unes à côté des autres, un dispositif de serrage étant prévu pour pouvoir engrener les dents des deux dentures en rapprochant les deux éléments tandis que, dans son état ouvert, les deux dentures sont distantes l'une de l'autre et les deux éléments peuvent être déplacés l'un par rapport à l'autre, avec au moins un élément de réglage pouvant se déplacer sous l'action d'un ressort et prévu au moins sur l'une des dentures pour empêcher toute rencontre des pointes de dents des dentures opposées lorsque le dispositif de serrage est fermé, l'extrémité libre de cet élément de réglage opposée à la denture dépassant sur les pointes des dents dans la position de l'élément de réglage précontraint vers l'extérieur,
**caractérisé en ce que**
l'élément de réglage (50) est placé pour pouvoir se déplacer dans le premier (41) des deux éléments (40, 41) et présente au moins une dent (51) dont la pointe (56) est opposée à l'un des flancs latéraux ( 57) de l'une des dents de la denture (43) du deuxième élément (40) lorsque les pointes des dents des deux dentures (42, 43) sont en position directement opposée.

2. Dispositif de verrouillage selon la revendication 1,
**caractérisé en ce qu'**
au moins un élément de réglage (50) est formé d'une tige dépassant dans une cavité dans la denture (42), et au moins une dent (51) est disposée à l'extrémité libre de la tige.

3. Dispositif de verrouillage selon la revendication 2,
**caractérisé en ce qu'**
au moins un ressort (54) configuré sous la forme d'un ressort de compression s'appuie sur l'élément de réglage (50), ce ressort se déplaçant vers l'extérieur dans sa position précontrainte limitée par une butée (55) lorsque le dispositif de serrage est ouvert.

4. Dispositif de verrouillage selon l'une des revendications 1 à 3,
**caractérisé en ce que**,
lorsque la position des pointes des dents des deux dentures (42, 43) est directement opposée, la pointe (56) de l'au moins une dent (51) de l'élément de réglage (50) est décalée d'un peu moins de la moitié de la distance (d) mesurée dans la direction parallèle au plan (44) entre une pointe d'une dent de la denture (43) et un creux entre deux dents de la denture (43) par rapport à une pointe d'une dent de la denture (43) du deuxième élément (40) opposé.

5. Dispositif de verrouillage selon la revendication 4,
**caractérisé en ce que**
le chevauchement de la pointe (56) de la dent (51) de l'élément de réglage (50) par rapport à la pointe de la dent de la denture (43) du deuxième élément (40) opposé représente à peu près un quart de cette distance (d).

6. Dispositif de verrouillage selon l'une des revendications 1 à 5,
**caractérisé en ce que**
la force du ressort (54) est élevée de telle sorte que, lorsque la pointe (56) de la dent (51) de l'élément de réglage (50) rencontre le flanc latéral (57) d'une dent de la denture (43) lorsque le dispositif de serrage est fermé dans une configuration des deux éléments où les pointes des dents des deux dentures (42, 43) sont directement opposées entre elles, les deux éléments (40, 41) sont déplacés dans une direction parallèle aux plans (44, 45) des pointes des dents des dentures (42, 43) sans abaisser la dent (51) jusqu'à ce que la pointe (56) atteigne le fond du creux entre deux dents de la denture (43).

7. Dispositif de verrouillage selon l'une des revendications 1 à 6,
**caractérisé en ce que**
les deux flancs latéraux (58, 59) de la dent (51) de l'élément de réglage (50) présentent des inclinaisons différentes entre elles au moins dans une partie de l'extension des flancs, le flanc latéral (58), qui est opposé à la pointe de l'une des dents de la denture (43) du deuxième élément, lorsque la position des pointes des dents des deux dentures (42, 43) est directement opposée, étant configurée au moins partiellement plus abrupte.

8. Dispositif de verrouillage selon l'une des revendications 1 à 7,
**caractérisé en ce que**
les deux flancs latéraux des dents de la denture (43) du deuxième élément présentent, au moins dans une partie des extensions de ces flancs, des inclinaisons différentes entre eux, le flanc latéral (57), qui est opposé à la pointe (56) de la dent (51) de l'élément de réglage (50) lorsque la position dés pointes des dents des deux dentures (42, 43) sont directement opposées, est configuré généralement au moins partiellement de manière plus abrupte.

9. Dispositif de verrouillage selon la revendication 8,
**caractérisé en ce que**
les flancs latéraux, configurés au moins partiellement plus plans, des dents de la denture (43) du deuxième élément présentent à chaque fois une partie (60) plus abrupte adjacente au creux entre deux dents et une partie (61) plus plane adjacente à pointe de la dent.

10. Dispositif de verrouillage selon la revendication 9,
**caractérisé en ce que**
la partie (61) plus plane est parallèle au flanc latéral (59) plus plan de la dent (51) de l'élément de réglage (50).

11. Dispositif de verrouillage selon la revendication 9 ou 10,
**caractérisé en ce que**
les parties(60) plus abruptes sont parallèles aux flancs latéraux (62) des dents de la denture (42) du premier élément (41) prévus pour l'installation de ces parties.

12. Dispositif de verrouillage selon l'une des revendications 7 à 11,
**caractérisé en ce que**
le flanc latéral (58) plus abrupt de la dent (51) de l'élément de réglage (50) est parallèl aux flancs latéraux (57) des dents de la denture (43) du premier élément qui peuvent être placés sur ce flanc latéral (58) plus abrupt.

13. Dispositif de verrouillage selon la revendication 12,
**caractérisé en ce que**
le flanc latéral (58) plus abrupt de la dent de l'élément de réglage (50), vu de côté dans sa position sortie, se trouve approximativement dans une ligne avec un flanc latéral d'une dent de la denture (42) du premier élément (41) et celle-ci se prolonge sur le flanc latéral de la dent de la denture (42).

14. Dispositif de verrouillage selon l'une des revendications 1 à 13,
**caractérisé en ce que**
le dispositif de serrage présente un boulon (5) dont l'axe (4) s'étend parallèlement à la direction du rapprochement, respectivement de l'éloignement, des deux éléments (40, 41).

15. Dispositif de verrouillage selon la revendication 14,
**caractérisé en ce que**
les plans des pointes des dents des dentures (17, 22) opposées ont un angle (67) déviant de la normale sur l'axe (4) avec l'axe (4).

16. Dispositif de verrouillage selon la revendication 15,
**caractérisé en ce que**
les éléments (40, 41) présentent des dentures (17, 22) disposées des deux côtés du boulon (5), au moins un élément de réglage (50) étant disposé uniquement dans la denture (17) d'un des deux éléments (40, 41) disposée sur un côté du boulon (5), et les plans des pointes des dents des deux dentures (17, 22) d'un élément respectif (40, 41) sont disposés l'un par rapport à l'autre en forme de V dans une coupe longitudinale parallèle à l'extension longitudinale des dents et parallèle à l'axe (4) du boulon (5).

17. Dispositif de verrouillage selon la revendication 16,
**caractérisé en ce que**
sur le côté de l'élément (41) opposé à l'élément de réglage (50) par rapport à l'axe (4), des surfaces de guidage (66, 63) des éléments (40, 41) coopèrent.

18. Dispositif de verrouillage selon l'une des revendications 1 à 17,
**caractérisé en ce que**
l'élément de réglage (50), dans une direction parallèle à la direction du rapprochement et de l'éloignement des deux éléments (40, 41), est placé pour se déplacer dans l'un des deux éléments (40, 41).

19. Dispositif de verrouillage selon l'une des revendications 1 à 18,
**caractérisé en ce que**
l'élément de réglage (50) présente plusieurs dents dont les flancs latéraux (58, 59) sont parallèles et dont les pointes (56) sont à une distance l'une de l'autre qui correspond à la distance des pointes des dents de la denture (42) du premier élément (41) ou à un multiple de celle-ci.
